# EUROPEAN PATENT APPLICATION

(11) **EP 1 408 486 A1**
(43) Date of publication of application: **14.04.2004**
(21) Application number: 03256190.4
(22) Date of filing: 30.09.2003
(51) Int. Cl.: G11B 5/53

(54) **Head drum assemblies**

(30) Priority: 07.10.2002 KR 2002061087
(71) Applicant: SAMSUNG ELECTRONICS CO., LTD., Suwon-City, Kyungki-do (KR)
(72) Inventor: Baik, Chung-hum, 832-2002, Paldal-gu Suwon-city Gyunggi-do (KR); Lee, Seung-woo, 542-106, Paldal-gu Suwon-city Gyunggi-do (KR); Hong, Sung-hee, Paldal-gu Suwon-city Gyunggi-do (KR)
(74) Representative: Geary, Stuart Lloyd

(57) **Abstract**

Disclosed is a head drum assembly of a tape recorder. An elastic body is mounted between upper and lower bearings as preloading means, in which the upper and lower bearings are interposed between a rotary drum and the shaft. As a result, the elastic body elastically biases the inner races of the upper and lower bearings upwardly and downwardly, respectively, whereby preload is applied to each of the upper and lower bearings.

## Description

The present invention relates to a head drum assembly for a tape recorder, comprising: a shaft; and a drum connected to the shaft by first and second separated bearings, and to a method of fabricating a head drum assembly, comprising: fitting a first bearing into a drum; fitting a shaft through the first bearing; and fitting a second bearing around the shaft.

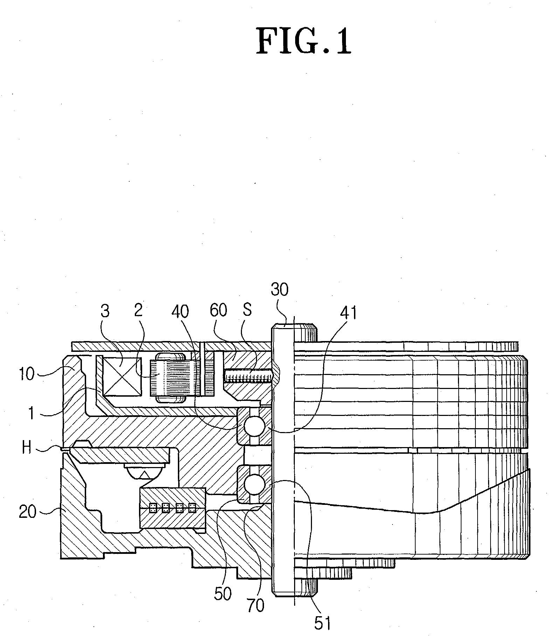

In general, tape recorders such as VCRs and camcorders are provided with a head drum assembly that is mounted for high-speed rotation. This enables information to be recorded and reproduced by the scanning of a magnetic head in relation to a magnetic tape. Figure 1 is a partial cross-sectional schematic view of a head drum assembly. As shown, the head drum assembly comprises: a rotary drum 10, which rotatably supports a magnetic head H for recording/reproducing information by scanning a running magnetic tape; a fixed drum 20, which is press-fitted onto a lower part of a shaft 30 engaged in a central axial bore of the rotary drum 10; an upper bearing 40 and a lower bearing 50 press-fitted between the rotary drum 10 and the shaft 30. An inner race of each bearing 40, 50 is located in the shaft 30 and an outer race of each is press-fitted into the rotary drum 10. A rotor 1 and a stator 2 are arranged relative to a magnet 3, which is mounted on the internal circumferential surface of the rotor 1.

The head drum assembly is provided with preloading means for applying preload to the upper bearing 40 and the lower bearing 50. In particular, a preloading boss 60 is provided above the upper bearing 40, and a rib 70 is provided on the fixed drum 20 below the lower bearing 50. The preloading boss 60 is secured by a set screw S so that a projection formed in the preloading boss 60 downwardly compresses the innermost race 41 of the upper bearing 40. The rib 70 upwardly compresses the inner race 51 of the lower bearing, thereby applying preload to the bearings.

There is a cost involved in providing the preloading boss 60 and the set screw. Also, because it is not easy to determine the position for securing the preloading boss 60 when engaging the set screw S, it is difficult to precisely control the preload. This can lead to the generation of noise while driving the bearings.

Furthermore, to remove thermal deformation caused by the excessive press-fitting of the bearings, it is required that the head drum assembly be subjected to a heat treatment process (such as annealing) after the bearings are assembled. This step reduces the manufacturing yield.

An aim of the present invention is to ameliorate or overcome these disadvantages.

The head drum assembly according to the invention is characterised by resilient preloading means for applying preload to the first and second bearings.

The method according to the invention is characterised by resilient preloading means to preload the bearings.

The invention will now be described by way of example only with reference to the accompanying drawings, in which:
Figure 1 is a partial cross-sectional schematic view of a conventional head drum assembly of a tape recorder;
Figure 2 is a cross-sectional schematic view of a head drum assembly according to the present invention; and
Figures 3A to 3E illustrate a method of assembling the Figure 2 head drum assembly.

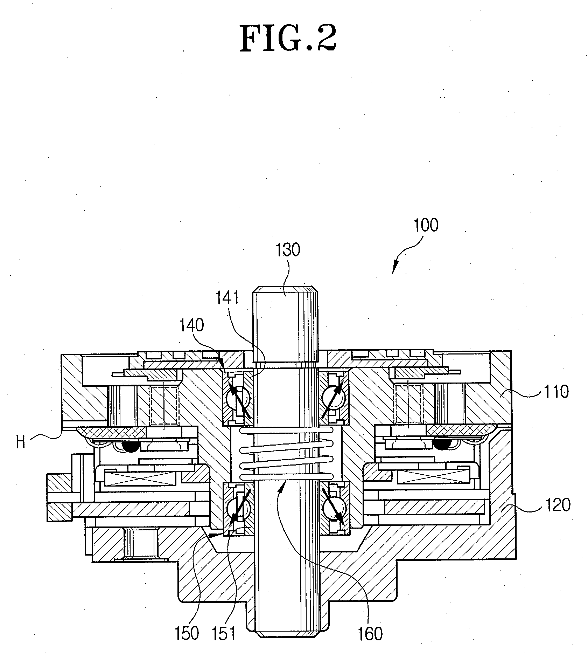

Referring to Figure 2, the head drum assembly 100 of a tape recorder according to the invention comprises: a rotary drum 110, a fixed drum 120 press-fitted onto a lower part of a shaft 130, an upper bearing 140 and a lower bearing 150 having inner races 141 and 151 respectively, and elastic preloading means 160.

The rotary drum 110 supports a magnetic head H for recording and reproducing information by scanning a running magnetic tape. The fixed drum 120 is engaged on an axial bore of the rotary drum 110, parallel to the rotary drum. The bearings 140, 150 are provided between the rotary drum 110 and the shaft 130. The preloading means 160 comprises an elastic body mounted on the circumferential surface of the shaft 130 and interposed between the inner races 141, 151 of the upper and lower bearings 140 and 150.

The elastic body 160 compresses the inner race 141 of the upper bearing 140 and the inner race 151 of the lower bearing 150 upward and downward, respectively, to effect preloading of the upper and lower bearings 140 and 150 in the directions indicated by the arrows.

The preloading means 160 can be formed from a coil spring in compression, as shown. However, the preloading means can take any other suitable form, as will be appreciated by the person skilled in the art. The main requirement of the preloading means is to effect compression of the bearings 140, 150.

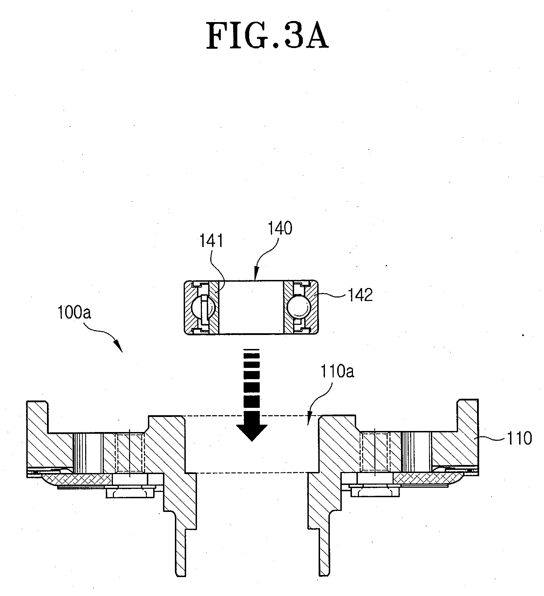

A description will now be given of the method of assembling the Figure 2 head drum assembly, with reference to Figures 3A to 3E.

Initially, the upper bearing 140 is vertically downwardly and forcibly press-fitted into a recess 110a formed in the central part of the top surface of the rotary bearing 110, thereby forming a first assembly 100a as shown in Figure 3A. Here, the outer race 142 of the upper bearing 140 comes into close contact with the internal circumferential surface of the recess 110a and is upwardly compressed. Therefore, the upper bearing is maintained in a finely raised state.

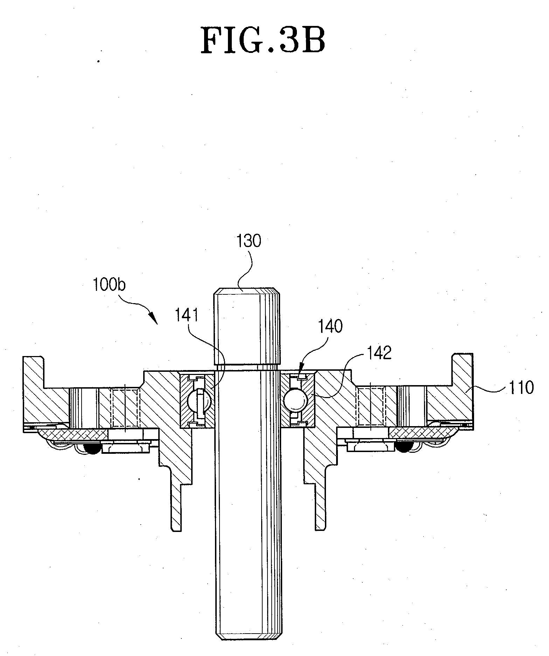

As shown in Figure 3B, the shaft 130 is then fitted into the upper bearing 140 of the first assembly 100a, thereby forming a second assembly 100b.

The outer diameter of the shaft 130 is somewhat larger than the inner diameter of the inner race 141 of the upper bearing 140. This results in the inner race 141 of the upper bearing 140 being tightly fitted with and bonded to the outer diameter of the shaft 130.

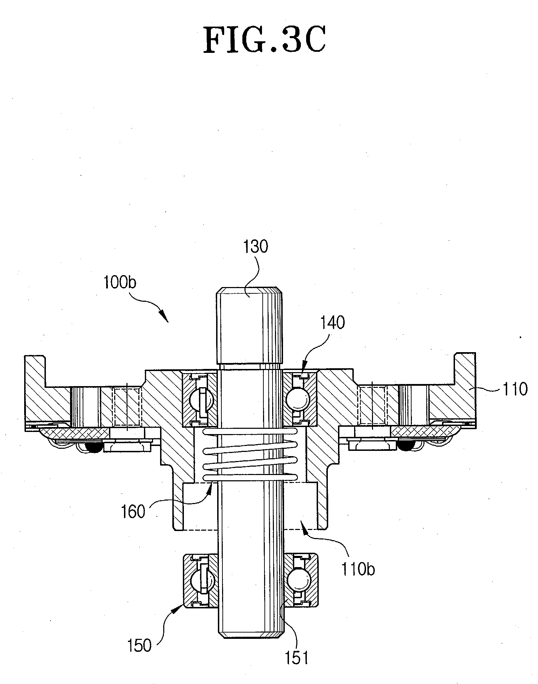

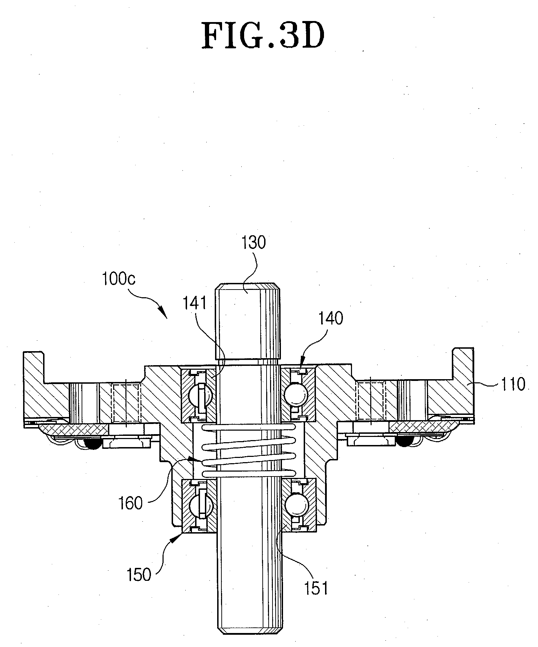

As shown in Figures 3C and 3D, the elastic body 160, e.g., a compression coil spring, is then installed as a preloading means. The lower bearing 150 is fitted into the lower part of the rotary drum 110, so that the inner race 151 of the lower bearing 150 supports the lower end of the elastic body 160 as shown in Figure 3D. The elastic body 160 is installed to support and bias elastically the inner race 141 of the upper bearing 140 upwardly as shown in Figure 3C. As a result, a third assembly 100c is formed. This results in a balanced state in the head drum assembly.

In forming the third assembly 100c, the lower bearing 150 is press-fitted onto the shaft 130 and then press-fitted into a recess 122 formed in the central part of the bottom surface of the rotary drum 110. Here, the inner race 151 of the lower bearing 150 comes into close contact with the circumferential outer surface of the shaft 130, and the elastic body 160 compresses and elastically biases the inner race 151 downwardly. As such, the elastic body 160 respectively compresses the inner race 141 of the upper bearing 140 and the inner race 151 of the lower bearing 150 upwardly and downwardly respectively, as a result of which preload is applied to the bearings in the directions indicated by the arrows shown in Figure 2.

Instead, the lower bearing 150 may be fitted onto the shaft such that the inner race 151 is moveable along the shaft.

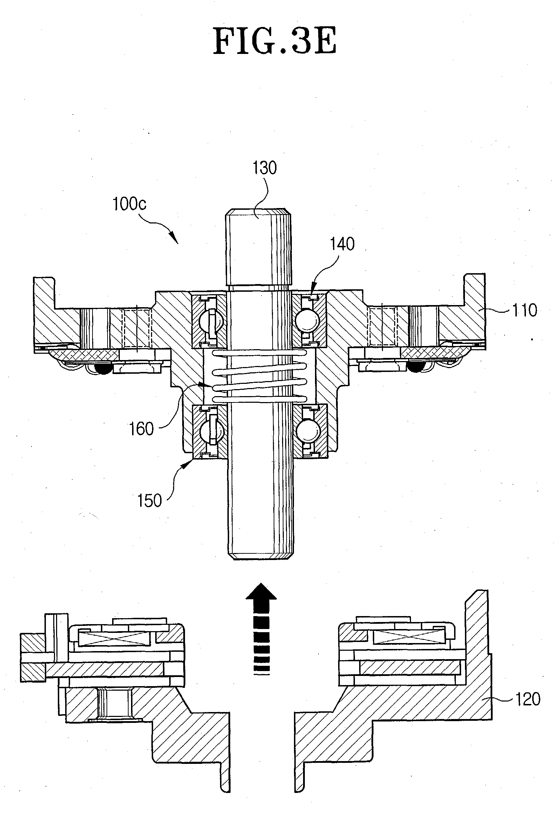

Finally, referring to Figure 3E, the fixed drum 120 is press-fitted onto the shaft 130 below the rotary drum 110 of the third assembly 100c. This completes the head drum assembly.

With this head drum assembly, a preloading boss and a screw for securing the boss are not required. Furthermore, it is also possible to omit the annealing step for removing thermal deformation caused in the manufacturing process. Thus, the cost of making the embodied head drum assembly can be less than that of making the described prior art assembly.

The invention is not limited to the embodiment described above, and variants will be envisaged by those skilled in the art without departing from the scope of the invention as defined by the claims. For example, other ways of applying the preload to the upper and lower bearings 140 and 150 will be apparent.

## Claims

1. A head drum assembly of a tape recorder, comprising:
a shaft;
a rotary drum which supports a magnetic head for recording and reproducing information by scanning a running magnetic tape;
a fixed drum, press-fitted onto a lower part of the shaft, engaged on an axial bore of the rotary drum, parallel to the rotary drum;
an upper bearing and a lower bearing, provided one on the other between the rotary drum and the shaft; and
preloading means for applying preload to the upper and lower bearings.

2. The head drum assembly of a tape recorder according to claim 1, wherein the upper and lower bearings each comprise an inner race, and wherein the preloading means comprises an elastic body mounted on the circumferential surface of the shaft and interposed between the upper and lower bearings to elastically bias and compress each of the inner races of the upper and lower bearings.

3. The head drum assembly of a tape recorder, wherein the elastic body comprises a spring.

4. A head drum assembly of a tape recorder, comprising:
a shaft;
a rotary drum which supports a magnetic head for recording and reproducing information by scanning a running magnetic tape;
a fixed drum, press-fitted onto a lower part of the shaft, engaged on an axial bore of the rotary drum, parallel to the rotary drum;
an upper bearing and a lower bearing, provided one on the other between the rotary drum and the shaft; and
a preload apparatus which applies a preload to the upper and lower bearings.

5. The head drum assembly of a tape recorder according to claim 4, wherein the upper and lower bearings each comprises an inner race, and wherein the preloading apparatus comprises an elastic body mounted on the circumferential surface of the shaft and interposed between the upper and lower bearings to elastically bias and compress each of the inner races of the upper and lower bearings.

6. The head drum assembly of a tape recorder according to claim 5, wherein the elastic body comprises a spring.

7. The head drum assembly of a tape recorder according to claim 4, wherein the rotary drum further comprises an upper recess for accepting the upper bearing and a lower recess for accepting the lower bearing.

8. The head drum assembly of a tape recorder according to claim 4, wherein the preload is applied to the inner race of the upper bearing in an upward direction,

9. The head drum assembly of a tape recorder according to claim 4, wherein the preload is applied to the inner race of the lower bearing in a downward direction.

10. The head drum assembly of a tape recorder according to claim 4, further comprising a fixed drum pressure fitted onto the shaft.

11. A method for fabricating a head drum assembly of a tape recorder, comprising:
press fitting an upper bearing into an upper recess of a rotary drum, which supports a magnetic head for recording and reproducing information by scanning a running magnetic tape;
press fitting a shaft through the upper bearing;
inserting preloading means around the shaft adjacent to a lower surface of the upper bearing;
press fitting a lower bearing around the shaft into a lower recess of the rotary drum, such that the preloading means is elastically biased against the upper and lower bearings; and
press fitting a fixed drum around the shaft, lower bearing and rotating drum.

12. The method according to claim 11, wherein the preload means comprises a spring.

13. The method according to claim 11, wherein the preload is applied to an inner race of the upper bearing in an upward direction, and the preload is applied to an inner race of the lower bearing in a downward direction.

14. A method for fabricating a head drum assembly of a tape recorder, comprising:
press fitting an upper bearing into an upper recess of a rotary drum, which supports a magnetic head for recording and reproducing information by scanning a running magnetic tape;
press fitting a shaft through the upper bearing;
inserting a preloading apparatus around the shaft adjacent to a lower surface of the upper bearing;
press fitting a lower bearing around the shaft into a lower recess of the rotary drum, such that the preloading means is elastically biased against the upper and lower bearings; and
press fitting a fixed drum around the shaft, lower bearing and rotating drum.

15. The method according to claim 14, wherein the preload apparatus comprises a spring.

16. The method according to claim 14, wherein the preload is applied to an inner race of the upper bearing in an upward direction, and the preload is applied to an inner race of the lower bearing in a downward direction.

17. A head drum assembly for a tape recorder, comprising:
a shaft (130); and
a drum (110) connected to the shaft by first and second separated bearings (140, 150),
**characterised by** resilient preloading means (160) for applying preload to the first and second bearings.

18. An assembly according to claim 17, wherein the preloading means is interposed between the bearings.

19. An assembly according to claim 17 or claim 18, in which the preloading means contacts inner races (141, 151) of the bearings.

20. An assembly according to any of claims 17 to 19, wherein the preloading means comprises a compression spring.

21. An assembly as claimed in any of claims 17 to 20, in which the bearings are situated in recesses in the drum, the recesses having substantially opposite-facing openings.

22. An assembly as claimed in claim 21, in which outer races of the bearings are press-fitted into the recesses.

23. An assembly as claimed in any of claims 17 to 22, further comprising a second drum (120) pressure-fitted onto the shaft.

24. An assembly as claimed in any of claims 17 to 23, in which the drum supports a magnetic head.

25. A method of fabricating a head drum assembly, comprising:
fitting a first bearing (140) into a drum (110);
fitting a shaft (130) through the first bearing; and
fitting a second bearing (150) around the shaft,
**characterised by** including resilient preloading means (160) to preload the bearings.

26. A method according to claim 25, comprising inserting the resilient preloading means between the first and second bearings.

27. A method according to claim 25 or claim 26, wherein the preloading means contacts an inner race of one or both of the bearings.

28. A method according to any of claims 25 to 27, wherein the preloading means comprises a compression spring.

29. A method according to any of claims 25 to 28, further comprising fitting a second drum (120) on the shaft opposite the second bearing to the first bearing.
